# EUROPÄISCHE PATENTANMELDUNG

(11) **EP 0 774 851 A2**
(43) Veröffentlichungstag der Anmeldung: **21.05.1997**
(21) Anmeldenummer: 96112659.6
(22) Anmeldetag: 06.08.1996
(51) Int. Cl.: H04L 29/06, H04M 11/06

(54) **Verfahren für die Zusammenarbeit eines Telekommunikationsendgerätes mit einem externen Rechner und Telekommunikationsendgerät**

(30) Priorität: 17.11.1995 DE 19542948
(71) Anmelder: ROBERT BOSCH GMBH, 70442 Stuttgart (DE)
(72) Erfinder: Maier, Wolfgang, 63225 Langen (DE); Winter, Rüdiger, 64560 Riedstadt (DE)

(57) **Zusammenfassung**

Es werden Verfahren für die Zusammenarbeit eines Telekommunikations-Endgerätes (1) mit einem externen Rechner (3) vorgeschlagen, die zum funktionalen Anschluß eines Telekommunikations-Endgerätes (1) mit vergleichsweise geringer Funktionalität an ein Telekommunikationsnetz dienen. Bei den Verfahren werden Protokolle für einen Meldungsaustausch zwischen dem Telekommunikationsnetz und dem Telekommunikations-Endgerät (1) über eine Schnittstelle (15) mit dem externen Rechner (3) ausgetauscht und im externen Rechner (3) ausgewertet bzw. erzeugt. In Abhängigkeit der Auswertung bzw. Erzeugung der Protokolle im externen Rechner (3) werden Steuerinformationen über die Schnittstelle (15) an eine Steuerung (19) des Telekommunikations-Endgerätes (1) zur Einleitung entsprechender Reaktionen bzw. Aktionen übertragen. Zudem können Steuerinformationen auch an eine Steuerung (17) des externen Rechners (3) zur Einleitung entsprechender Reaktionen bzw. Aktionen übertragen werden. Die Steuerung (19) des Telekommunikations-Endgerätes (1) kann zur Prüfung des Anschlusses eines betriebsbereiten externen Rechners (3) an die Schnittstelle (15) verwendet werden. Bei nicht an die Schnittstelle (15) angeschlossenem betriebsbereiten externen Rechner (3) ist ein PC-Ausbetrieb mit im Vergleich zum PC-Betrieb eingeschränkter Funktionalität möglich. Ein außerdem vorgeschlagenes Telekommunikations-Endgerät (1) umfaßt neben der Steuerung (19) und der Schnittstelle (15) eine von der Steuereinheit (19) des Telekommunikations-Endgerätes (1) gesteuerte Schalteinheit (21) zur Verbindung einer an das Telekommunikationsnetz angeschlossenen Leitungssteuerung (23) mit der Schnittstelle (15) bzw. mit einer Protokollauswerteeinheit (31) und/oder einer Protokollerstellungseinheit (33), wobei die Protokollauswerteeinheit (31) und/oder die Protokollerstellungseinheit (33) an die Steuerung (19) des Telekommunikations-Endgerätes (1) angeschlossen sind, zur Durchführung der erfindungsgemäßen Verfahren.

## Beschreibung

### Stand der Technik

Die Erfindung geht von einem Verfahren für die Zusammenarbeit eines an ein Telekommunikationsnetz angeschlossenen Telekommunikations-Endgerätes mit einem externen Rechner nach der Gattung der nebengeordneten Ansprüche 1 und 4 und von einem Telekommunikations-Endgerät nach der Gattung des nebengeordneten Anspruchs 8 aus .

Aus der DE 41 28 686 C2 ist schon ein Verfahren für die Zusammenarbeit eines Telekommunikations-Endgerätes mit einem Personal-Computer bekannt, bei dem ein Telekommunikations-Endgerät, beispielsweise ein Fernsprechapparat, der lediglich eine Wähltastatur und eine Steuereinrichtung aufweist, welche auch zur Steuerung einer Anzeigeeinrichtung geeignet sein kann, mit Hilfe eines handelsüblichen Personal-Computers zu einem Comfort-Endgerät mit einer Vielzahl von zusätzlichen Merkmalen ausgestattet ist. Über eine Schnittstelle findet ein gegenseitiger Informationsaustausch zwischen dem Telekommunikations-Endgerät und dem Personal-Computer statt. Dabei werden für das Telekommunikations-Endgerät bestimmte Informationen vom Personal-Computer aus in der gleichen Codierung erzeugt und genau so der im Telekommunikations-Endgerät befindlichen Steuereinrichtung angeboten, wie sie auch von einer Tastatursteuerung bei einem Tastendruck an diese Steuereinrichtung übermittelt werden. Andererseits werden von der Steuereinrichtung des Telekommunikations-Endgerätes erzeugte Informationen zum Personal-Computer gesendet. In Abhängigkeit von der Art der gesendeten Information sind weitere Tastendruckfunktionen am Telekommunikations-Endgerät vom Personal-Computer aus automatisch auslösbar.

### Vorteile der Erfindung

Die erfindungsgemäßen Verfahren mit den Merkmalen der Ansprüche 1 und 4 haben demgegenüber den Vorteil, daß Protokolle für einen Meldungsaustausch ohne den Umweg über die Steuerung des Telekommunikations-Endgerätes mit dem externen Rechner ausgetauscht und im externen Rechner ausgewertet bzw. erstellt werden, so daß Rechenleistung und Speicherplatz im Telekommunikations-Endgerät eingespart und auf diese Weise weniger Hardware im Telekommunikations-Endgerät benötigt wird. Durch die Nutzung der ohnehin vorhandenen Hardware des externen Rechners werden auf diese Weise weniger Kosten verursacht.

Vorteilhaft ist außerdem, daß Steuerinformationen zur Einleitung von Aktionen und Reaktionen auf die Protokolle ebenfalls im externen Rechner erzeugt und über die Schnittstelle an die Steuerung des Telekommunikations-Endgerätes übertragen werden, so daß die Steuerung des Telekommunikations-Endgerätes nur noch zur Durchführung der Reaktionen bzw. Aktionen stimuliert werden muß. Auch dies führt zu einer Reduktion von Rechen- und Speicheraufwand in der Steuerung des Telekommunikations-Endgerätes.

Durch die beschriebenen Vorteile kann das Telekommunikations-Endgerät als vergleichsweise kostengünstiges Stimulusgerät ohne Funktionalität an einem funktionalen Telekommunikationsnetzanschluß betrieben werden, wobei die Funktionalität eines ohnehin vorhandenen externen Rechners genutzt wird.

Durch die in den abhängigen Ansprüchen aufgeführten Maßnahmen sind vorteilhafte Weiterbildungen und Verbesserungen der in den unabhängigen Ansprüchen 1 und 4 angegebenen Verfahren möglich.

Besonders vorteilhaft ist gemäß den Ansprüchen 3 bzw. 6 die Ausstattung des Telekommunikations-Endgerätes mit Funktionalität zur Realisierung eines PC-Ausbetriebes bei nicht an die Schnittstelle angeschlossenem betriebsbereiten externen Rechner.

Vorteilhaft gemäß Anspruch 7 ist auch eine eigenständige Prüfung der Steuerung des Telekommunikations-Endgerätes, ob ein betriebsbereiter externer Rechner an die Schnittstelle angeschlossen ist.

Das erfindungsgemäße Telekommunikations-Endgerät gemäß dem unabhängigen Anspruch 8 hat den Vorteil, daß durch einen einfachen Schaltvorgang zwischen einem PC-Ausbetrieb bei nicht an die Schnittstelle angeschlossenem betriebsbereiten externen Rechner und einem Komfort-Betrieb bei an die Schnittstelle angeschlossenem betriebsbereiten externen Rechner umgeschaltet werden kann.

### Zeichnung

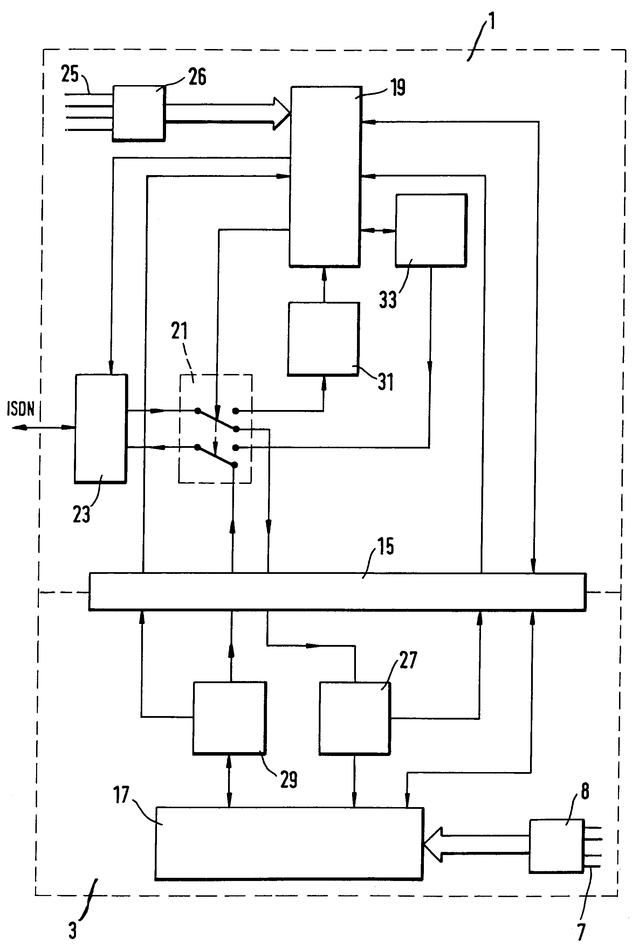

Ein Ausführungsbeispiel der Erfindung ist in der Zeichnung dargestellt und in der nachfolgenden Beschreibung näher erläutert. Es zeigt die Figur ein Blockschaltbild eines Telekommunikations-Endgerätes, das über eine Schnittstelle mit einem externen Rechner verbunden ist.

### Beschreibung des Ausführungsbeispiels

In der Figur kennzeichnet 25 eine Tastatur eines Telekommunikations-Endgerätes 1, die in bekannterweise von einer Tastatursteuerung 26 koordinatenförmig abgetastet wird. Dabei entstehen Anreize für eine Steuerung 19 des Telekommunikations-Endgerätes 1. Die Steuerung 19 steuert eine Schalteinheit 21, die eine einerseits an ein ISDN-Telekommunikationsnetz und andererseits an die Steuerung 19 angeschlossene als Controller ausgeführte Leitungssteuerung 23 wahlweise über eine Schnittstelle 15 mit einer Protokollerstellungseinheit 29 und einer Protokollauswerteeinheit 27 eines externen Rechners 3 oder mit einer Protokollerstellungseinheit 33 und einer Protokollauswerteeinheit 31 des Telekommunikations-Endgerätes 1 verbindet. Die Protokollerstellungseinheit 33 und die Protokollauswerteeinheit 31 des Telekommunikations-Endgerätes 1 sind direkt mit der Steuerung 19 verbunden. Die Protokollerstellungseinheit 29 und die Protokollauswerteeinheit 27 des externen Rechners 3 sind direkt mit einer Steuerung 17 des externen Rechners 3 und über die Schnittstelle 15 mit der Steuerung 19 des Telekommunikations-Endgerätes 1 verbunden. Die Steuerung 17 des externen Rechners 3 ist außerdem über die Schnittstelle 15 mit der Steuerung 19 des Telekommunikations-Endgerätes 1 verbunden. Zum externen Rechner 3 gehört eine Tastatur 7, die über eine Tastatursteuerung 8 mit der Steuerung 17 des externen Rechners 3 verbunden ist.

Bei an die Schnittstelle 15 angeschlossenem betriebsbereiten externen Rechner 3 sendet die Steuerung 17 des externen Rechners 3 ein Signal über die Schnittstelle 15 an die Steuerung 19 des Telekommunikations-Endgerätes 1, so daß die Steuerung 19 des Telekommunikations-Endgerätes 1 erkennt, daß ein betriebsbereiter externer Rechner 3 an die Schnittstelle 15 angeschlossen ist. Solange die Steuerung 19 des Telekommunikations-Endgerätes 1 ein solches Signal empfängt, steuert sie die Schalteinheit 21 so, daß der Controller 23 über die Schnittstelle 15 mit der Protokollerstellungseinheit 29 und der Protokollauswerteeinheit 27 des externen Rechners 3 verbunden ist. Ankommende Meldungen aus dem ISDN-Telekommunikationsnetz werden dann vom Controller 23 über die Schnittstelle 15 der Protokollauswerteeinheit 27 des externen Rechners 3 zugeführt und dort ausgewertet. Die Protokollauswerteeinheit 27 des externen Rechners 3 sendet dann in Abhängigkeit der Auswertung der Protokolle Steuerinformationen über die Schnittstelle 15 an die Steuerung 19 des Telekommunikations-Endgerätes 1 zur Einleitung entsprechender Reaktionen, wie beispielsweise des Einschaltens eines Lautsprechers. Außerdem führt die Protokollauswerteeinheit 27 des externen Rechners 3 der Steuerung 17 des externen Rechners 3 in Abhängigkeit der Auswertung der Protokolle ebenfalls Steuerinformationen zur Einleitung entsprechender Reaktionen zu, wie beispielsweise des Anzeigens von Daten auf einem Bildschirm des externen Rechners 3.

Über die Tastatur 7 und die Tastatursteuerung 8 des externen Rechners 3 kann der Steuerung 17 des externen Rechners 3 ein Verbindungswunsch mitgeteilt werden, der zur Erzeugung eines entsprechenden Protokolls in der Protokollerstellungseinheit 29 des externen Rechners 3 führt. Beim Absetzen einer Meldung wird dann das erstellte Protokoll über die Schnittstelle 15 und die Schalteinheit 21 dem Controller 23 zugeführt und dort für eine Übertragung an das ISDN-Telekommunikationsnetz vorbereitet und an dieses weitergegeben. Außerdem sendet die Protokollerstellungseinheit 29 des externen Rechners 3 in Abhängigkeit des erzeugten Protokolls Steuerinformationen über die Schnittstelle 15 an die Steuerung 19 des Telekommunikations-Endgerätes 1 zur Einleitung entsprechender Aktionen. Eine solche Aktion kann beispielsweise darin bestehen, daß die Steuerung 19 des Telekommunikations-Endgerätes 1 den Controller 23 zur Belegung eines B-Kanales veranlaßt. In Abhängigkeit des erzeugten Protokolls werden außerdem Steuerinformationen von der Protokollerstellungseinheit 29 des externen Rechners 3 an die Steuerung 17 des externen Rechners 3 zur Einleitung entsprechender Aktionen, wie beispielsweise der Darstellung des Verbindungswunsches auf dem Bildschirm des externen Rechners 3, übertragen.

Ist kein betriebsbereiter externer Rechner 3 über die Schnittstelle 15 mit dem Telekommunikations-Endgerät 1 verbunden, so empfängt die Steuerung 19 des Telekommunikations-Endgerätes 1 kein Bereitschaftssignal und steuert die Schalteinheit 21 so, daß der Controller 23 mit der Protokollerstellungseinheit 33 und der Protokollauswerteeinheit 31 des Telekommunikations-Endgerätes 1 verbunden ist. In diesem Fall wird das Protokoll eines ankommenden Rufes der Protokollauswerteeinheit 31 des Telekommunikations-Endgerätes 1 zugeführt und dort ausgewertet, wobei in Abhängigkeit der Auswertung des Protokolls Steuerinformationen der Steuereinheit 19 des Telekommunikations-Endgerätes 1 zur Einleitung entsprechender Reaktionen, wie beispielsweise des Einschaltens des Lautsprechers, zugeführt werden. Wird über die Tastatur 25 und die Tastatursteuerung 26 des Telekommunikations-Endgerätes 1 der Steuerung 19 des Telekommunikations-Endgerätes 1 ein Verbindungswunsch mitgeteilt, so veranlaßt diese die Protokollerstellungseinheit 33 des Telekommunikations-Endgerätes 1 zur Erstellung eines entsprechenden Protokolls, das dann über die Schalteinheit 21 dem Controller 23 zur Vorbereitung einer Übertragung an das ISDN-Telekommunikationsnetz zugeführt und an dieses weitergegeben wird. In Abhängigkeit des erzeugten Protokolls werden von der Protokollerstellungseinheit 33 des Telekommunikations-Endgerätes 1 Steuerinformationen an die Steuerung 19 des Telekommunikations-Endgerätes 1 zur Einleitung entsprechender Aktionen übertragen. Eine solche Aktion besteht beispielsweise darin, daß die Steuerung 19 des Telekommunikations-Endgerätes 1 den Controller 23 zur Belegung eines B-Kanales veranlaßt. Um die Anschaltung des externen Rechners 3 über die Schnittstelle 15 an das Telekommunikations-Endgerät 1 nicht überflüssig zu machen, ist die Funktionalität im Telekommunikations-Endgerät 1 gegenüber der Funktionalität im externen Rechner 3 erheblich eingeschränkt, so daß bei nicht angeschlossenem betriebsbereiten externen Rechner 3 im sogenannten PC-Ausbetrieb nur ein vergleichsweise geringer Funktionsumfang durch das Telekommunikations-Endgerät 1 realisierbar ist, der beispielsweise darin besteht, daß ein Ruf entgegengenommen werden kann oder ein Notruf absetzbar ist.

Soll das Telekommunikations-Endgerät 1 nur zum Empfang von Meldungen aus dem Telekommunikationsnetz verwendbar sein, so ist keine Protokollerstellungseinheit 33 im Telekommunikations-Endgerät 1 erforderlich.

Soll das Telekommunikations-Endgerät 1 nur zum Absetzen von Meldungen an das Telekommunikationsnetz verwendbar sein, so ist keine Protokollauswerteeinheit 31 im Telekommunikations-Endgerät 1 erforderlich.

Wird die Tastatur 25 des Telekommunikations-Endgerätes 1 bei angeschlossenem betriebsbereiten externen Rechner 3 verwendet, so werden die von der Tastatursteuerung 26 der Steuerung 19 des Telekommunikations-Endgerätes 1 zugeführten Tastatursteuerinformationen über die Schnittstelle 15 der Steuerung 17 des externen Rechners 3 zur Weiterverarbeitung zugeführt.

An privaten Telekommunikations-Großanlagen und öffentlichen Telekommunikationsnetzen müssen funktionale Telekommunikations-Endgeräte angeschlossen werden, da die Mächtigkeit der Telekommunikationsnetze so groß ist, daß die Funktionalität nicht zentralisiert werden kann und deshalb keine Stimulus-Telekommunikations-Endgeräte mit vergleichsweise geringer oder fehlender Funktionalität angeschlossen werden können. Dies ist nur bei kleineren Telekommunikationsanlagen mit vergleichsweiser geringer Anzahl von angeschlossenen Telekommunikations-Endgeräten möglich. Die erfindungsgemäßen Verfahren hingegen ermöglichen den Anschluß von Stimulus-Telekommunikations-Endgeräten an Telekommunikations-Großanlagen bzw. öffentliche Telekommunikationsnetze bei Benutzern, die über einen externen Rechner verfügen. Der externe Rechner übernimmt dann die erforderliche Funktionalität.

## Patentansprüche

1. Verfahren für die Zusammenarbeit eines an ein Telekommunikationsnetz angeschlossenen Telekummunikations-Endgerätes (1) mit einem externen Rechner (3), dadurch gekennzeichnet, daß Protokolle für einen Meldungsaustausch zwischen dem Telekommunikationsnetz und dem Telekommunikations-Endgerät (1) beim Empfang von Meldungen aus dem Telekommunikationsnetz vom Telekommunikations-Endgerät (1) über eine Schnittstelle (15) an den externen Rechner (3) übertragen werden, daß die Protokolle im externen Rechner (3) ausgewertet werden und daß vom externen Rechner (3) in Abhängigkeit der Auswertung der Protokolle Steuerinformationen über die Schnittstelle (15) an eine Steuerung (19) des Telekommunikations-Endgerätes (1) zur Einleitung entsprechender Reaktionen übertragen werden.

2. Verfahren nach Anspruch 1, dadurch gekennzeichnet, daß vom externen Rechner (3) in Abhängigkeit der Auswertung der Protokolle Steuerinformationen an eine Steuerung (17) des externen Rechners (3) zur Einleitung entsprechender Reaktionen übertragen werden.

3. Verfahren nach Anspruch 1, dadurch gekennzeichnet, daß bei nicht an die Schnittstelle (15) angeschlossenem betriebsbereiten externen Rechner (3) Protokolle beim Empfang von Meldungen aus dem Telekommunikationsnetz im Telekommunikations-Endgerät (1) ausgewertet und in Abhängigkeit der Auswertung der Protokolle Steuerinformationen der Steuereinheit (19) des Telekommunikations-Endgerätes (1) zur Einleitung entsprechender Reaktionen zugeführt werden.

4. Verfahren für die Zusammenarbeit eines an ein Telekommunikationsnetz angeschlossenen Telekommunikations-Endgerätes (1) mit einem externen Rechner (3), insbesondere nach Anspruch 1, 2 oder 3, dadurch gekennzeichnet, daß beim Absetzen von Meldungen an das Telekommunikationsnetz Protokolle im externen Rechner (3) erzeugt, über die Schnittstelle (15) dem Telekommunikations-Endgerät (1) zugeführt und dort für eine Übertragung an das Telekommunikationsnetz vorbereitet werden und daß in Abhängigkeit der erzeugten Protokolle Steuerinformationen über die Schnittstelle (15) an die Steuerung (19) des Telekommunikations-Endgerätes (1) zur Einleitung entsprechender Aktionen übertragen werden.

5. Verfahren nach Anspruch 4, dadurch gekennzeichnet, daß in Abhängigkeit der erzeugten Protokolle Steuerinformationen an die Steuerung (17) des externen Rechners (3) zur Einleitung entsprechender Aktionen übertragen werden.

6. Verfahren nach Anspruch 4, dadurch gekennzeichnet, daß bei nicht an die Schnittstelle (15) angeschlossenem betriebsbereiten externen Rechner (3) beim Absetzen von Meldungen an das Telekommunikationsnetz Protokolle im Telekommunikations-Endgerät (1) erzeugt und für eine Übertragung an das Telekommunikationsnetz vorbereitet und in Abhängigkeit der erzeugten Protokolle Steuerinformationen an die Steuerung (19) des Telekommunikations-Endgerätes (1) zur Einleitung entsprechender Aktionen übertragen werden.

7. Verfahren nach einem der vorherigen Ansprüche, dadurch gekennzeichnet, daß von der Steuerung (19) des Telekommunikations-Endgerätes (1) geprüft wird, ob ein betriebsbereiter externer Rechner (3) an die Schnittstelle (15) angeschlossen ist.

8. Telekommunikations-Endgerät (1) mit einer Steuerung (19) und einer mit der Steuerung (19) verbundenen Schnittstelle (15), dadurch gekennzeichnet, daß eine von der Steuerung (19) gesteuerte und an ein Telekommunikationsnetz angeschlossene, als Controller ausgebildete Leitungssteuerung (23) über eine Schalteinheit (21) einerseits mit der Schnittstelle (15) und andererseits mit einer Protokollauswerteeinheit (31) und/oder einer Protokollerstellungseinheit (33) verbindbar ist, daß die Protokollauswerteeinheit (31) und/oder die Protokollerstellungseinheit (33) an die Steuerung (19) angeschlossen sind und daß die Schalteinheit (21) von der Steuerung (19) in Abhängigkeit der Betriebsbereitschaft eines an die Schnittstelle (15) anschließbaren externen Rechners (3) gesteuert ist.
